# DEMANDE DE BREVET EUROPEEN

(11) **EP 0 794 526 A1**
(43) Date de publication de la demande: **10.09.1997**
(21) Numéro de dépôt: 96402103.4
(22) Date de dépôt: 02.10.1996
(51) Int. Cl.: G11B 5/02, G11B 5/33, G11B 5/37, G11B 5/39

(54) **Procédé d'enregistrement magnétique**

(30) Priorité: 06.03.1996 FR 9602823
(71) Demandeur: SILMAG, 38524 Saint-Egrève Cedex (FR)
(72) Inventeur: Lazzari, Jean-Pierre, 38700 Corenc (FR)
(74) Mandataire: Dubois-Chabert, Guy

(57) **Abrégé**

On mesure la composante horizontale du champ magnétique au voisinage du support d'enregistrement (10) et l'on obtient un signal de lecture à deux pics (P₁,P₂) de polarité opposée.

Application à l'enregistrement, notamment à haute densité.

## Description

### Domaine technique

La présente invention a pour objet un procédé d'enregistrement magnétique. Elle trouve une application dans l'enregistrement d'informations, par exemple sur disque, de préférence dans le cas où une grande densité d'information est recherchée.

### Etat de la technique antérieure

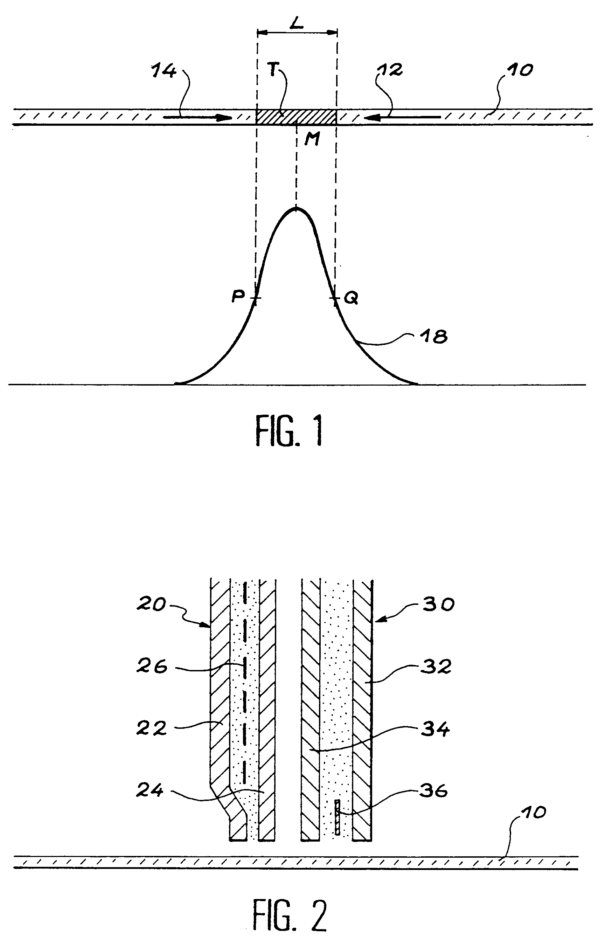

La figure 1 annexée montre un support d'enregistrement 10, qui peut être un disque dur, sur lequel des informations ont été enregistrées de manière magnétique. Chaque élément d'information, ou bit, est enregistré dans le support d'enregistrement sous forme d'une zone de transition référencée T, qui sépare une région 12 où l'aimantation présente une certaine direction et une région 14 où l'aimantation magnétique présente la direction opposée.

Les têtes de lecture utilisées aujourd'hui sont sensibles à la composante du champ magnétique qui est perpendiculaire au plan du support. Ces têtes délivrent un signal qui a la forme de la courbe 18 représentée sur la figure 1. Il s'agit d'une forme en cloche, avec un sommet qui correspond au milieu M de la zone de transition T.

Dans le cas où la distance tête-support et où l'entrefer de lecture sont petits, alors on définit en général la longueur L de la transition par l'intervalle séparant les deux points P et Q situés à mi-hauteur de la courbe.

Les têtes d'écriture et de lecture qui permettent de mettre en oeuvre un tel procédé sont représentées schématiquement sur la figure 2. On y voit une tête d'écriture 20, avec deux pièces polaires 22 et 24 et un bobinage conducteur 26. Juxtaposée se trouve une tête de lecture 30, avec deux pièces polaires 34 et 36 et un moyen sensible au champ magnétique, par exemple un élément magnétorésistant 36. Cet élément est monté perpendiculairement au plan général du support, de sorte qu'il est sensible à la composante du champ magnétique perpendiculaire au support, (comme représenté sur la figure 1).

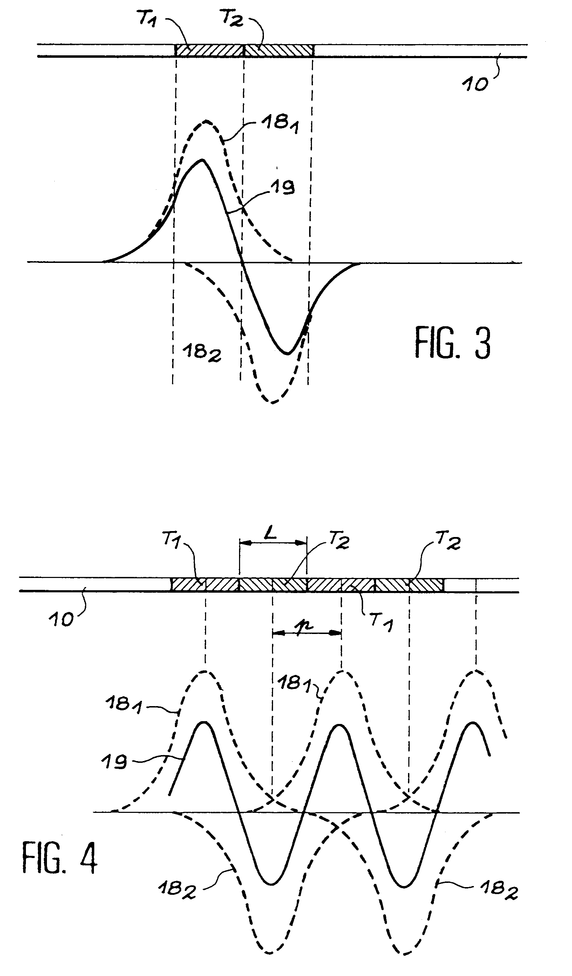

Si l'on enregistre sur le support deux transitions de sens opposés T₁ et T₂, comme représenté sur la figure 3, le signal de lecture sera constitué par la somme des deux signaux 18₁ et 18₂ relatifs respectivement aux deux transitions T₁ et T₂. Comme ces signaux ont des polarités opposées et qu'ils sont décalés l'un par rapport à l'autre, leur somme est un signal 19 qui présente deux bosses de polarité opposée, chacune ayant une amplitude inférieure à l'amplitude des signaux pris isolément.

Si l'on enregistre une pluralité de transitions placées les unes à côté des autres, comme représenté sur la figure 4, les signaux 18₁ propres aux transitions de type T₁ vont partiellement être compensés par les signaux 18₂ propres aux transitions de type T₂, et réciproquement, de sorte que le signal global délivré par la tête de lecture sera le signal 19 dont l'amplitude est très inférieure à l'amplitude d'une transition isolée.

Ce phénomène est préjudiciable, car il affecte la sensibilité du dispositif d'enregistrement et limite la densité d'informations susceptibles d'être enregistrées.

La présente invention a justement pour but de remédier à cet inconvénient.

### Exposé de l'invention

A cette fin, l'invention propose d'opérer non plus sur la composante verticale du champ mais sur la composante horizontale de celui-ci. De manière surprenante, et comme on le comprendra mieux par la suite, le phénomène de compensation mutuelle propre à l'art antérieur disparaît au profit d'un phénomène qui est, au contraire, un renforcement du signal améliorant la sensibilité du dispositif et permettant de gagner en densité d'enregistrement.

De façon précise, la présente invention a pour objet un procédé d'enregistrement magnétique dans lequel :
- dans une opération d'écriture, chaque élément d'informations est enregistré sur un support magnétique sous forme d'une zone de transition entre une première région où l'aimantation a une première direction et une seconde région où l'aimantation a une seconde direction opposée à la première,
- dans une opération de lecture, on mesure, à l'aide d'une tête magnétique en déplacement relatif par rapport au support, les variations du champ magnétique provenant du support au voisinage de la zone de transition,
ce procédé étant caractérisé par le fait que, dans l'opération de lecture, on utilise une tête magnétique de lecture sensible à la composante du champ magnétique qui est parallèle au support, le signal de lecture propre à une transition étant alors constitué par deux pics de polarité opposée avec passage à zéro au niveau du centre de la zone de transition.

Dans un mode de mise en oeuvre avantageux, on enregistre les divers éléments d'informations sur le support sous forme de zones de transitions disposées les unes à la suite des autres, avec un pas qui est compris entre environ la moitié de la largeur de la zone de transition et environ 1,5 fois cette largeur.

Dans une variante particulièrement avantageuse, les zones de transition sont écartées d'un pas égal à la largeur de la zone de transition.

### Brève description des dessins

- la figure 1, déjà décrite, illustre la technique connue d'enregistrement d'une transition et de lecture de la composante perpendiculaire du champ ;
- la figure 2, déjà décrite, montre un ensemble connu de têtes d'écriture et de lecture ;
- la figure 3, déjà décrite, montre pourquoi le signal de lecture est affaibli dans le cas d'une double transition, lorsque on lit la composante perpendiculaire au plan du support ;
- la figure 4, déjà décrite, illustre le cas de quatre transitions de signe opposé lorsqu'on lit la composante perpendiculaire ;
- la figure 5 illustre le procédé de l'invention et la forme du signal de lecture ;
- la figure 6 montre un exemple de tête planaire pouvant être utilisée dans la mise en oeuvre du procédé de l'invention ;
- la figure 7 montre pourquoi le signal de lecture est renforcé dans le cas d'une double transition ;
- la figure 8 illustre le cas de quatre transitions de signes opposés ;
- la figure 9 permet de comparer le rendement de lecture du procédé de l'invention et du procédé de l'art antérieur en fonction du pas des transitions ;
- la figure 10 illustre un procédé de traitement du signal de lecture.

### Exposé détaillé de modes de réalisation

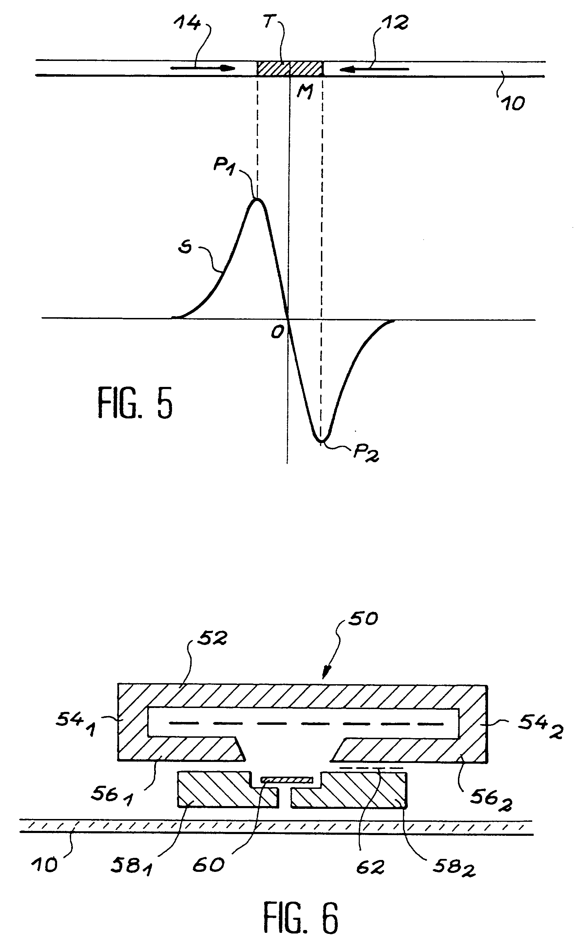

On voit, sur la figure 5, un support d'enregistrement 10 semblable à celui de la figure 1, avec une zone de transition T situées entre deux régions 12 et 14 où l'aimantation présente des directions opposées. En mesurant la composante horizontale du champ présent au voisinage du support 10, on obtient un signal S présentant deux pics P₁ et P₂ correspondant sensiblement aux extrémités de la transition T et une valeur nulle au niveau du milieu M de la transition. En effet, pour une transition isolée telle que T, la composante horizontale du champ est d'abord nulle, puis augmente lorsqu'on s'approche de la transition, passe par un maximum, décroît pour s'annuler lorsqu'on passe au milieu de la zone T, change de signe, croît à nouveau lorsqu'on s'éloigne du milieu, passe par un maximum puis tend enfin vers zéro.

C'est la raison pour laquelle le signal de lecture, fondé sur cette composante horizontale, présente cette forme caractéristique en deux pics de polarité opposée.

Au voisinage d'une telle transition, la composante perpendiculaire du champ évolue d'une tout autre manière, en passant par un maximum au milieu de la transition, sans s'annuler, ce qui explique la différence de forme des signaux de lecture pour l'invention et pour la technique antérieure.

Pour mesurer la composante horizontale du champ au voisinage du support d'enregistrement, on utilise un dispositif sensible à cette composante et, par exemple, une tête magnétique dite planaire, comme celle qui est illustrée schématiquement sur la figure 6. Cette tête, qui porte la référence générale 50, comprend une pièce magnétique arrière 52, deux piliers 54₁, 54₂, deux concentrateurs de flux 56₁, 56₂, deux pièces polaires 58₁, 58₂ faisant face au support 10. La tête comprend en outre un moyen de lecture, qui peut être soit un élément magnétorésistant 60 placé sous l'entrefer séparant les pièces polaires, soit un élément à effet HALL placé entre les pièces polaires et les concentrateurs, soit tout autre moyen équivalent. Dans cette tête, les moyens de mesure du champ sont disposés parallèlement au support d'enregistrement.

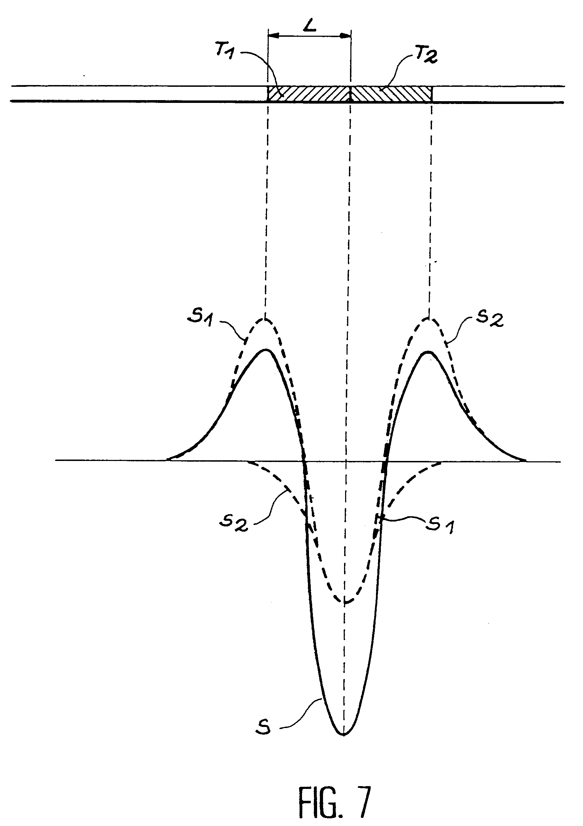

Le signal de lecture illustré sur la figure 5 est doublement avantageux : d'abord, il conduit à un renforcement dans le cas de plusieurs transitions juxtaposées, ensuite, il conduit à une meilleure précision dans son traitement, comme on va le voir en liaison avec les figures 7 à 10.

Sur la figure 7, tout d'abord, il s'agit du cas où le support d'enregistrement présente deux transitions de signe opposé, soit T₁ et T₂. Cette figure sera donc comparer avec la figure 3 déjà décrite et relative à l'art antérieur.

La transition T₁ produit un signal S₁ analogue au signal S de la figure 5 et la transition T₂ un signal S₂ symétrique par rapport à un axe perpendiculaire au plan du support et décalé de la longueur L des transitions. On voit donc que, dans la zone centrale située entre T₁ et T₂, les deux signaux S₁ et S₂ ont même polarité et même amplitude et s'ajoutent donc (alors que, dans l'art antérieur illustré sur la figure 3, les signaux 18₁ et 18₂ se compensaient mutuellement). Le signal de lecture global S est donc d'amplitude double.

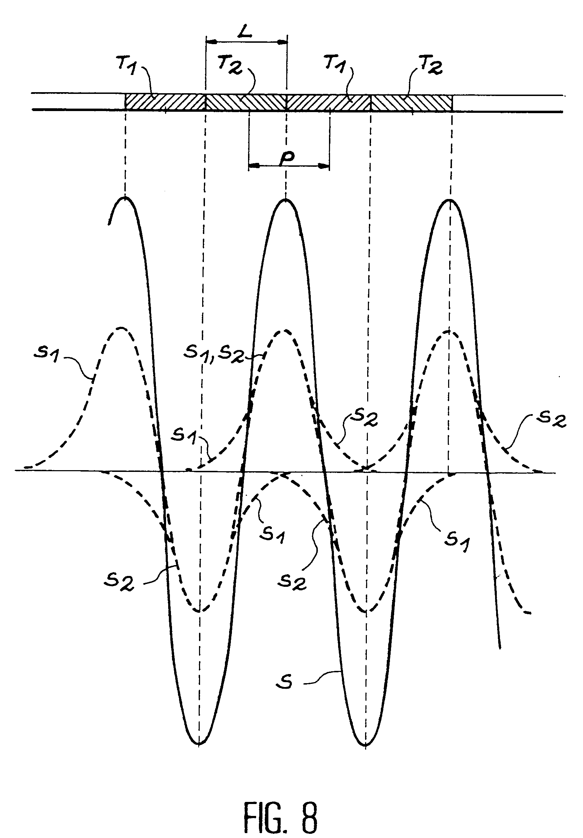

L'effet est encore plus saisissant dans le cas d'une pluralité de transitions de sens opposés, comme illustré sur la figure 8 (qui est à comparer à la figure 4 relative à l'art antérieur). Sur cette figure, le pas p des transitions est supposé égal à la longueur L des transitions. Dans ces conditions, les signaux S₁ et S₂ propres aux transitions T₁ et T₂ se superposent dans la zone de leurs pics, de sorte que le signal global S présente une succession de pics dont l'amplitude est double de celle des pics de chacun des signaux individuels. Par comparaison, dans le cas de la figure 4 relative à l'art antérieur, l'amplitude du signal global tombait à 53% de l'amplitude du signal propre à une seule transition, alors que selon l'invention il double.

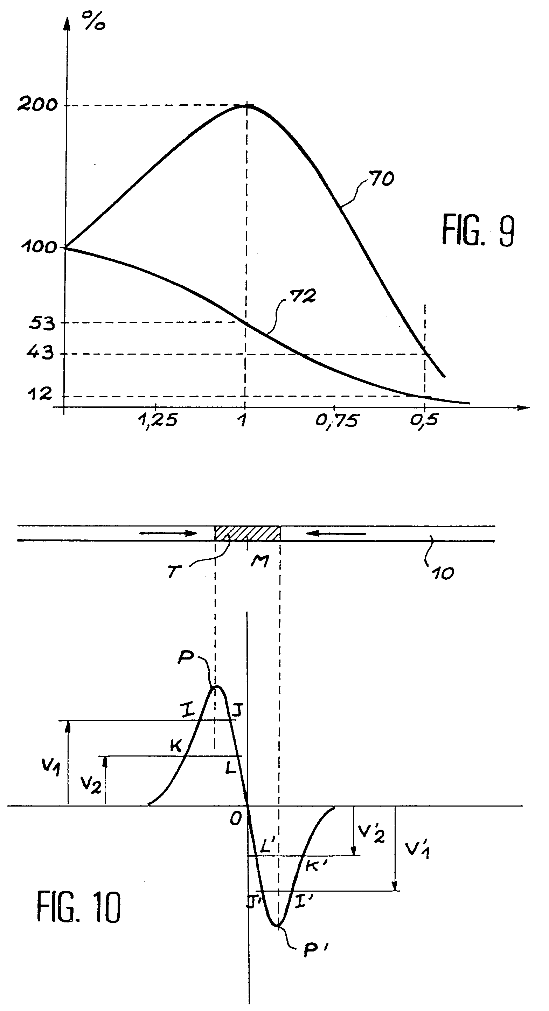

Naturellement, cette concordance particulière entre le pas p et la longueur L des transitions n'est pas obligatoire, bien qu'avantageuse. Lorsque le pas p diffère de L, autrement dit lorsque le rapport p/L diffère de l'unité, le taux de renforcement du signal varie comme illustré par la courbe 70 de la figure 9 où le rapport p/L est porté en abscisses et le taux en ordonnées. Pour (p/L)=1, le taux est de 200% ; il tombe à 43% pour (p/L)=0,5 et est égal à 100% pour (p/L)=1,5.

La figure 9 montre également, à titre de comparaison, la courbe 72 relative à la technique antérieure. Lorsque (p/L)=1, on est à 53% de l'amplitude propre à une transition isolée, et pour (p/L)=0,5 on tombe à 12% (à comparer avec 43% pour l'invention).

On voit donc qu'avec l'invention, un enregistrement avec un pas égal à la moitié des transitions reste parfaitement exploitable, alors qu'avec la technique antérieure, pour obtenir la même sensibilité, il faudrait travailler avec un pas plus grand, égal à au moins 0,8L.

Inversement, pour un pas p égal à L, comme le signal est doublé selon l'invention on pourra amincir et reserrer les pistes d'enregistrement et doubler leur densité, à densité d'enregistrement linéique constante, ce qui va certes réduire l'amplitude du signal de mesure d'un facteur 2 et raménera donc l'intensité du signal de lecture à la valeur obtenue dans l'art antérieur, mais ce qui permettra de double la densité surfacique d'enregistrement.

Le second avantage du signal à deux pics obtenu selon l'invention est lié aux facilités qu'il offre pour son traitement. Il est en effet beaucoup plus facile de traiter un tel signal qu'un signal en cloche tel que celui de la figure 1, où la détermination de la position du sommet reste aléatoire. Dans le cas de l'invention, on peut exploiter des techniques connues en télécommunications, en particulier la technique de codage dite PRML ("Partial Response (PR) signaling with Maximum Likelihood (LM) sequence detection"). Une version simplifiée de cette technique est illustrée sur la figure 10. Pour détecter la position du sommet d'un pic, par exemple le pic P, on détecte la position des deux points I et J où le signal de lecture prend une première valeur égale à une première amplitude de référence V₁ ayant la polarité du pic à détecter et des deux points K, L où le signal de lecture prend une seconde valeur égale à une seconde amplitude de référence V₂ de même polarité. On détermine la position P du sommet du pic ayant ladite polarité à partir de la position des quatre points I, J, K, L obtenus (en faisant une double moyenne).

On effectue le même traitement pour le pic P' de polarité opposée, avec les valeurs V'₁, V'₂ et les quatre points I', J', K', L'.

A partir de la position des pics, on détermine le point central O qui correspond au point milieu M de la transition.

## Revendications

1. Procédé d'enregistrement magnétique, dans lequel :
- dans une opération d'écriture, chaque élément d'informations est enregistré sur un support magnétique (10) sous forme d'une zone de transition (T) entre une première région (12) où l'aimantation a une première direction et une seconde région (14) où l'aimantation a une seconde direction opposée à la première,
- dans une opération de lecture, on mesure, à l'aide d'une tête magnétique (30) en déplacement relatif par rapport au support (10), les variations du champ magnétique provenant du support au voisinage de la zone de transition,
ce procédé étant caractérisé par le fait que, dans l'opération de lecture, on utilise une tête magnétique de lecture (50) sensible à la composante du champ magnétique qui est parallèle au support (10), le signal de lecture (S) propre à une transition étant alors constitué par deux pics (P₁, P₂) de polarité opposée avec passage à zéro au niveau du centre (M) de la zone de transition (T).

2. Procédé selon la revendication 1, caractérisé par le fait qu'on enregistre les divers éléments d'informations sur le support (10) sous forme de zones de transitions (T₁, T₂) disposées les unes à la suite des autres, avec un pas (p) qui est compris entre environ la moitié de la longueur (L) de la zone de transition et environ 1,5 fois cette longueur.

3. Procédé selon la revendication 2, caractérisé par le fait que les zones de transition (T₁, T₂) sont écartées d'un pas (p) égal à la longueur (L) de la zone de transition (T₁, T₂).

4. Procédé selon la revendication 1, caractérisé par le fait que l'on traite le signal de lecture (S) constitué par les deux pics de polarité opposée pour détecter la position du sommet (P₁, P₂) de chacun des pics, d'où l'on déduit la position du passage par zéro du signal correspondant au milieu (M) de la transition (T).

5. Procédé selon la revendication 4, caractérisé par le fait que, pour détecter la position du sommet d'un pic, on détecte la position de deux points (I,J) où le signal de lecture prend une première valeur égale à une première amplitude de référence (V₁) ayant la polarité du pic à détecter et les deux points (K,L) où le signal de lecture prend une seconde valeur égale à une seconde amplitude de référence (V₂) de même polarité, et par le fait que l'on détermine la position du sommet (P₁) du pic ayant ladite polarité à partir de la position des quatre points obtenus (I, J, K, L).

6. Procédé selon la revendication 1, caractérisé par le fait qu'on utilise une tête planaire (50) avec un élément sensible au champ magnétique disposé parallèlement au support d'enregistrement (10).

7. Procédé selon la revendication 6, caractérisé par le fait que l'élément sensible au champ magnétique est un élément magnétorésistant (60).

8. Procédé selon la revendication 6, caractérisé par le fait que l'élément sensible au champ magnétique est un élément à effet HALL (62).
